(19) **Europäisches Patentamt**
**European Patent Office**
**Office européen des brevets**

(11) **EP 2 353 215 B1**

(12) **EUROPÄISCHE PATENTSCHRIFT**

(45) Veröffentlichungstag und Bekanntmachung des Hinweises auf die Patenterteilung:
**30.09.2015 Patentblatt 2015/40**

(21) Anmeldenummer: **09779376.4**

(22) Anmeldetag: **28.04.2009**

(51) Int Cl.:
***H02J 7/00*** *(2006.01)*

(86) Internationale Anmeldenummer:
**PCT/EP2009/055160**

(87) Internationale Veröffentlichungsnummer:
**WO 2010/060655 (03.06.2010 Gazette 2010/22)**

(54) **SYSTEM ZUR ÜBERWACHUNG VON KONDENSATORZELLEN**

SYSTEM FOR MONITORING CAPACITOR CELLS

SYSTÈME DE SURVEILLANCE DE CELLULES DE CONDENSATEUR

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **03.11.2008 DE 102008056962**

(43) Veröffentlichungstag der Anmeldung:
**10.08.2011 Patentblatt 2011/32**

(60) Teilanmeldung:
**12155713.6 / 2 463 984**

(73) Patentinhaber: **Flextronics International Kft. Tab 8660 (HU)**

(72) Erfinder:
- **HERKE, Dirk**
  **72663 Großbettlingen (DE)**
- **BARTH, Karsten**
  **09126 Chemnitz (DE)**
- **KOCUR, Vit**
  **3320 02 Stary Plzenec (CZ)**

(74) Vertreter: **Rupprecht, Kay et al**
**Meissner, Bolte & Partner GbR**
**Widenmayerstraße 47**
**80538 München (DE)**

(56) Entgegenhaltungen:
**EP-A1- 1 202 426       EP-A2- 1 460 744**
**WO-A1-2004/073001     US-A- 5 545 933**
**US-A1- 2003 210 017**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein System zur Überwachung einer Vielzahl von in einem Kondensatormodul in Reihe geschalteten Kondensatorzellen, die als elektrische Energiespeicher in einer Energiespeichereinrichtung eingesetzt sind und in dieser durch einen durch alle Kondensatorzellen fließenden Aufladestrom aufladbar oder durch einen Entladestrom entladbar sind. Dabei umfasst das System eine Messeinheit, mit welcher durch Spannungsmessungen die an den einzelnen Kondensatorzellen anliegenden Spannungen ermittelbar sind, und es ist eine Auswerteeinheit vorgesehen, mit welcher eine Sollspannung für die Kondensatorzellen festlegbar ist, wobei das System mindestens einen zu jeder Kondensatorzelle zuschaltbaren Entladezweig aufweist, der durch eine Entladesteuereinheit steuerbar ist, die entsprechend der festgelegten Sollspannung und der anliegenden Spannung die jeweilige Kondensatorzelle auf diesen entlädt.

Bei derartigen in Reihe geschalteten Kondensatorzellen besteht das Problem, dass diese aufgrund von Alterungsvorgängen ihre Kapazität ändern oder dass sich parasitäre Entladungsprozesse einstellen und sich somit im Laufe der Zeit ungleiche Spannungen an den einzelnen Kondensatorzellen einstellen, die letztlich die Energiespeicherkapazität des Kondensatormoduls negativ beeinträchtigen.

Ein Überwachungssystem der eingangsgenannten Art ist beispielsweise aus der US 2003/210017 A1 bekannt. Dort ist ein System zur Überwachung einer Vielzahl von in einem Kondensatormodul in Reihe geschalteten Kondensatorzellen offenbart, die als elektrische Energiespeicher in einer Energiespeichereinrichtung eingesetzt sind und in dieser durch einen durch alle Kondensatorzellen fließenden Aufladestrom aufladbar oder durch einen Entladestrom entladbar sind, wobei das System eine Messeinheit umfasst, mit welcher durch Spannungsmessungen die an den einzelnen Kondensatorzellen anliegenden Spannungen ermittelbar sind, wobei eine Auswerteeinheit, dort in Form einer Steuerung ("Controller"), vorgesehen ist, mit welcher eine Sollspannung für die Kondensatorzellen, dort in Abhängigkeit eines die Kapazität der Kondensatoren variierenden Parameters (in diesem Falle die Temperatur), festlegbar ist, und wobei das System mindestens einen zu jeder Kondensatorzelle zuschaltbaren Entladezweig aufweist, der durch eine Entladesteuereinheit steuerbar ist, die entsprechend der festgelegten Sollspannung und der anliegenden Spannung die jeweilige Kondensatorzelle auf diesen entlädt.

Der Erfindung liegt daher die Aufgabe zugrunde, ein System zur Überwachung derartiger Kondensatorzellen zu schaffen, welches die durch die Änderung der Kapazität einzelner Zellen bedingter Probleme verhindert und damit die Genauigkeit der Auswerteeinheit steigert.

Diese Aufgabe wird bei einem System der eingangs beschriebenen Art erfindungsgemäß durch die Merkmale des Patentanspruchs 1 gelöst.

Der Vorteil der erfindungsgemäßen Lösung ist darin zu sehen, dass mit dieser die Möglichkeit besteht, eine ungleichmäßige Aufladung der Kondensatorzellen zu reduzieren und dadurch Energiespeicherkapazität des Kondensatormoduls dadurch zu verbessern, dass die Kapazität der einzelnen Kondensatorzellen berücksichtigt wird. So sieht die erfindungsgemäße Lösung vor, dass mit der Auswerteeinheit eine aktuelle Sollspannung für die jeweilige Kondensatorzelle festlegbar ist. Eine derartige Sollspannung für die jeweilige Kondensatorzelle kann in verschiedenster Art und Weise ermittelt werden. Beispielsweise könnte eine aktuelle Sollspannung in einem Parameterfeld abhängig von einer Betriebsdauer oder einer Ladezyklenzahl hinterlegt sein.

Des Weiteren sieht die erfindungsgemäße Lösung vor, dass mit der Auswerteeinheit aus der ermittelten Gesamtspannung des Kondensatormoduls und der bei Aufladung des Kondensatormoduls auf die maximale Gesamtspannung vorgesehen Maximalspannungen an der die Sollspannung für die jeweilige Kondensatorzelle festlegbar ist.Die Festlegung der Sollspannung kann im einfachsten Fall so erfolgen, dass nur ein Einstellen der Sollspannung bei den Kondensatorzellen erfolgt, deren Spannung bei voller Aufladung des Kondensatormoduls über der Maximalspannung liegt.

Vorteilhafte Weiterbildungen der Erfindungen sind in den Unteransprüchen angegeben.

Besonders günstig ist es, wenn die Auswerteeinheit die Sollspannungen für die Kondensatorzellen derart ermittelt, dass beim Aufladen des Kondensatormoduls auf die maximale Gesamtspannung alle Kondensatorzellen gleichzeitig die Maximalspannung erreichen.

Um die Genauigkeit bei der Auswerteeinheit zu steigern ist vorzugsweise vorgesehen, dass die Auswerteeinheit die Kapazität der einzelnen Kondensatorzellen berücksichtigt.Die Kapazität könnte dabei vorab gemessen und in einer Tabelle niedergelegt sein.

Besonders günstig ist es jedoch, wenn die Auswerteeinheit eine Kapazitätsrelation der Kondensatorzellen durch eine Messung ermittelt. Die Kapazitätsrelation gibt dabei das Verhältnis der Gesamtkapazität des Kondensatormoduls zur Kapazität jeder einzelnen Kondensatorzelle an.

Zweckmäßigerweise lässt sich die Kapazitätsrelation durch Messung von Spannungen der Kondensatorzellen in zwei verschiedenen Ladezuständen bestimmen.

Hinsichtlich der Ermittlung der Spannungen an den Kondensatorzellen ist es prinzipiell denkbar, die Messeinheit so auszubilden, dass sie die Spannung an jeder der Kondensatorzellen unmittelbar misst.

Um den Aufwand einer gleichzeitigen Messung aller Spannungen an allen Kondensatorzellen zu reduzieren, wäre in diesem Fall eine Multiplexvorrichtung denkbar, welche die Messeinheit von Kondensatorzelle zu Kondensatorzelle weiterschaltet, um nacheinander die Spannungen an den einzelnen Kondensatorzellen zu erfassen.

Weitere Merkmale und Vorteile der Erfindung sind Gegenstand der nachfolgenden Beschreibung sowie der zeichnerischen Darstellung eines Ausführungsbeispiels.

In der Zeichnung zeigen:

Fig. 1     eine schematische Schaltung einer erfindungsgemäßen Energiespeichereinrichtung;

Fig. 2     eine Darstellung eines Messzyklus für Spannungen an Zwischenabgriffen über der Zeit;

Fig. 3     ein Flussdiagramm zur Funktionsweise eines erfindungsgemäßen Systems und

Fig. 4     eine Darstellung von Messzyklen und Symmetrierzyklen über der Zeitachse.

Um die Genauigkeit bei der Auswerteeinheit zu steigern ist vorzugsweise vorgesehen, dass die Auswerteeinheit die Kapazität der einzelnen Kondensatorzellen berücksichtigt.

Die Kapazität könnte dabei vorab gemessen und in einer Tabelle niedergelegt sein.

Besonders günstig ist es jedoch, wenn die Auswerteeinheit eine Kapazitätsrelation der Kondensatorzellen durch eine Messung ermittelt.

Die Kapazitätsrelation gibt dabei das Verhältnis der Gesamtkapazität des Kondensatormoduls zur Kapazität jeder einzelnen Kondensatorzelle an.

Zweckmäßigerweise lässt sich die Kapazitätsrelation durch Messung von Spannungen der Kondensatorzellen in zwei verschiedenen Ladezuständen bestimmen.

Hinsichtlich der Ermittlung der Spannungen an den Kondensatorzellen wurden bislang keine näheren Angaben gemacht.

Prinzipiell wäre es denkbar, die Messeinheit so auszubilden, dass sie die Spannung an jeder der Kondensatorzellen unmittelbar misst.

Um den Aufwand einer gleichzeitigen Messung aller Spannungen an allen Kondensatorzellen zu reduzieren, wäre in diesem Fall eine Multiplexvorrichtung denkbar, welche die Messeinheit von Kondensatorzelle zu Kondensatorzelle weiterschaltet, um nacheinander die Spannungen an den einzelnen Kondensatorzellen zu erfassen.

Eine andere vorteilhafte Lösung sieht vor, dass die Messeinheit eine Gesamtspannung aller Kondensatorzellen des Kondensatormoduls erfasst.

Ferner ist vorzugsweise vorgesehen, dass die Messeinheit Spannungen an Zwischenabgriffen zwischen jeweils zwei Kondensatorzellen erfasst. Mit den Spannungen an den Zwischenabgriffen besteht die Möglichkeit, die einzelnen Spannungen an den einzelnen Kondensatorzellen zu ermitteln.

Insbesondere sieht eine vorteilhafte Möglichkeit vor, dass die Messeinheit die Spannungen zwischen dem jeweiligen Zwischenabgriff und Masse erfasst.

Um in einfacher Weise zu den einzelnen, an den kondensatorzellen anliegenden Spannungen zu kommen, ist vorzugsweise vorgesehen, dass die Messeinheit von der an dem jeweiligen Zwischenabgriff gemessenen Spannung die Spannung, die an dem masseseitig nächstliegenden Zwischenabgriff gemessen wird, subtrahiert, so dass damit die Spannung an der Kondensatorzelle ermittelbar ist, die zwischen dem Zwischenabgriff und dem masseseitig nächstliegenden Zwischenabgriff angeordnet ist.

Prinzipiell könnte die Messeinheit die Spannungen alle gleichzeitig erfassen.

Um ein möglichst kosteneffizientes Erfassen der Spannungen an den Zwischenabgriffen vorzusehen, ist die Messeinheit so ausgebildet, dass sie die Spannungen an den Zwischenabgriffen in aufeinanderfolgenden Messphasen erfasst.

Das Erfassen der Spannungen an den Zwischenabgriffen in einzelnen Messphasen lässt sich vorzugsweise dadurch realisieren, dass der Messeinheit ein Schalternetzwerk zugeordnet ist, durch welches der jeweilige Zwischenabgriff auf die Messeinheit aufschaltbar ist.

Ein derartiges Schalternetzwerk ist vorzugsweise durch einen Decoder steuerbar.

Insbesondere ist dabei vorgesehen, dass die Messeinheit in einem Messzyklus getaktet in aufeinanderfolgenden Messphasen die Spannungen an allen Zwischenabgriffen misst.

Beispielsweise könnte die Messeinheit ständig die Spannungen der Kondensatorzellen ermitteln.

Um jedoch den Betrieb der erfindungsgemäßen Energiespeichereinrichtung nicht unnötig zu unterbrechen, ist vorzugsweise vorgesehen, dass die Messeinheit die Spannungen in festgelegten Zeitabständen ermittelt.

Die Zeitabstände können dabei abhängig von der Gesamtspannung des Kondensatormoduls sein. Beispielsweise ist bei einer niedrigen Gesamtspannung des Kondensatormoduls die Gefahr gering, dass eine der Kondensatorzellen die Maximalspannung überschreitet, während die Gefahr größer ist, je näher die Gesamtspannung des Kondensatormoduls an die maximale Gesamtspannung des Kondensatormoduls heranreicht.

Aus diesem Grund ist vorzugsweise vorgesehen, dass die Zeitabstände, in welchen die Messeinheit die Spannungen der Kondensatorzellen erfasst, in Abhängigkeit von einer Gesamtspannung des Kondensatormoduls festgelegt sind.

Beispielsweise verkürzen sich die Zeitabstände, zu welchen die Spannungen an den Kondensatorzellen ermittelt werden, immer mehr, je mehr die Gesamtspannung des Kondensatormoduls der maximalen Ladespannung kommt.

Hinsichtlich der vorgesehenen Entladezweige wurden im Zusammenhang mit der bisherigen Erläuterung der erfindungsgemäßen Lösung keine näheren Angaben gemacht.

So sieht eine vorteilhafte Lösung vor, dass jeder Kondensatorzelle ein Entladezweig zugeordnet ist.

Die Entladezweige können dabei gemeinsam aktivierbar sein.

Besonders günstig ist es, wenn jeder Entladezweig einzeln aktivierbar ist.

Beispielsweise könnten die Entladezweige in jedem Betriebszustand der Energiespeichereinrichtung aktivierbar sein.

Um jedoch bei der Symmetrierung der Kondensatorzellen mit möglichst kleinen Strömen arbeiten zu können, ist vorzugsweise vorgesehen, dass die Entladezweige in einem lade- oder entladefreien Zustand aktivierbar sind.

Ein derartiger lade- oder entladefreier Zustand ist beispielsweise ein Ruhezustand der Energiespeichereinrichtung, beispielsweise dann, wenn das Kraftfahrzeug nicht in Betrieb ist.

Schließlich wurden im Zusammenhang mit der erfindungsgemäßen Lösung keine weiteren Angaben über die Art der Messeinheit gemacht.

Weitere Merkmale und Vorteile der Erfindung sind Gegenstand der nachfolgenden Beschreibung sowie der zeichnerischen Darstellung eines Ausführungsbeispiels.

In der Zeichnung zeigen:

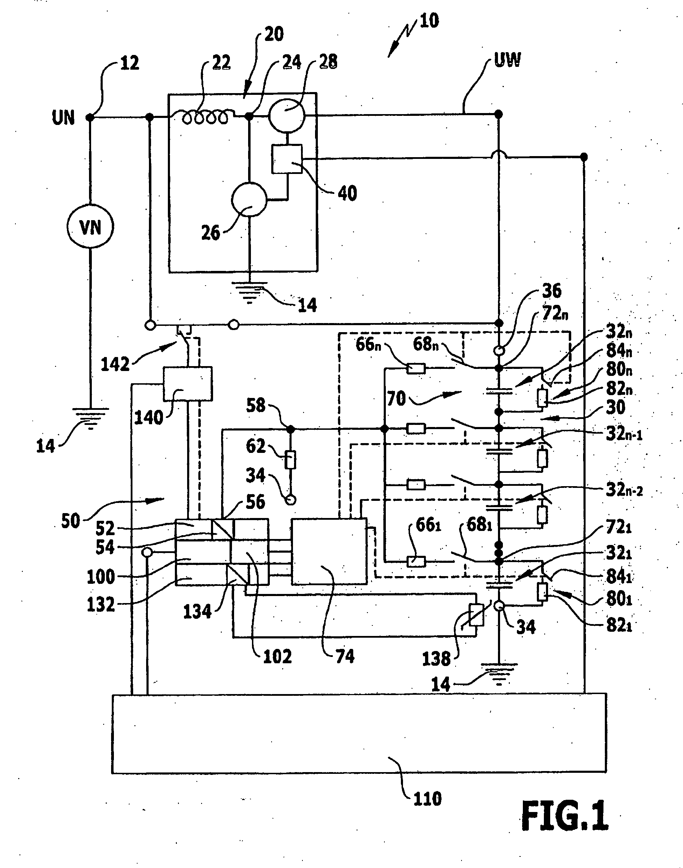

Fig. 1     eine schematische Schaltung einer erfindungsgemäßen Energiespeichereinrichtüng;

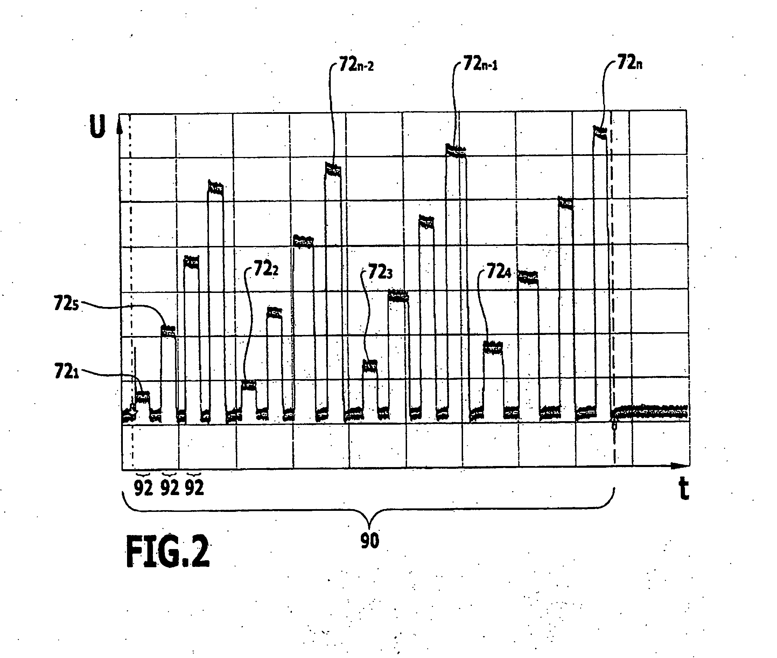

Fig. 2     eine Darstellung eines Messzyklus für Spannungen an Zwischenabgriffen über der Zeit;

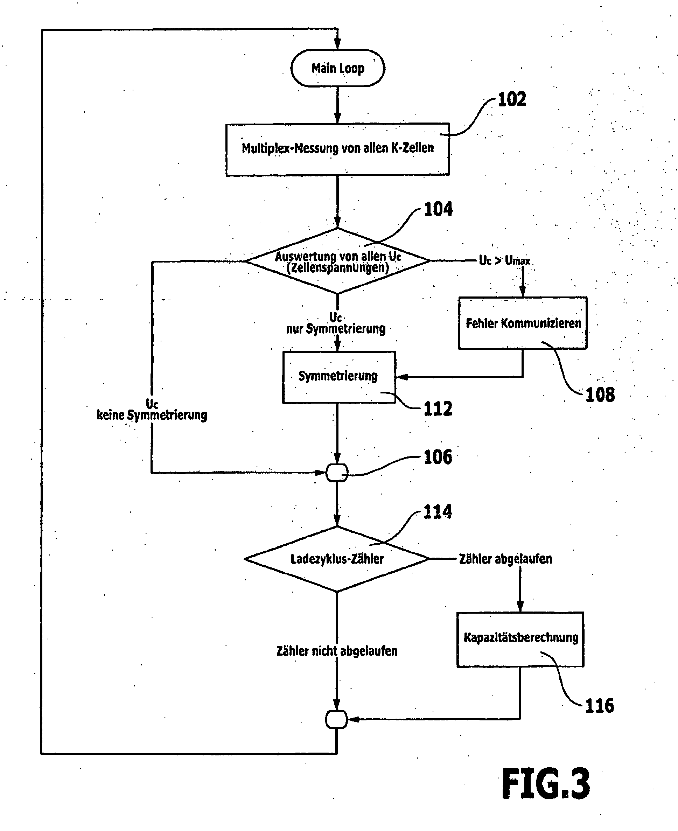

Fig. 3     ein Flussdiagramm zur Funktionsweise eines erfindungsgemäßen Systems und

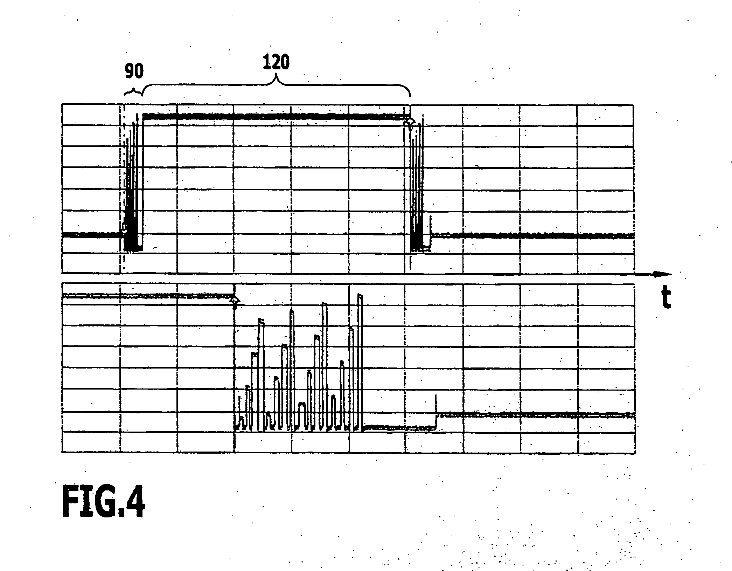

Fig. 4     eine Darstellung von Messzyklen und Symmetrierzyklen über der Zeitachse.

Ein in Fig. 1 dargestelltes Ausführungsbeispiel einer erfindungsgemäßen Energiespeichereinrichtung zur Speicherung elektrischer Energie 10, dargestellt in Fig. 1, umfasst einen Anschluss 12, welcher mit einem Versorgungsnetzwerk VN, beispielsweise eines Kraftfahrzeugs verbunden ist.

Über den Anschluss 12 ist die Einrichtung zur Speicherung von elektrischer Energie in der Lage, aus dem Versorgungsnetz VN Energie aufzunehmen oder in dieses Versorgungsnetz abzugeben.

Hierzu ist ein als Ganzes mit 14 bezeichneter Spannungswandler vorgesehen, welcher die Spannung UN im Versorgungsnetz auf eine Wandlerspannung UW wandeln kann, welche sich von der Spannung UN des Versorgungsnetzes unterscheidet.

Ein Beispiel eines derartigen Spannungswandlers, ausgeführt als Buck-Boost-Wandler, umfasst eine Drossel 22, die mit dem Anschluss 12 verbunden ist und auf einer dem Anschluss gegenüberliegenden Seite der Drossel 22 eine Verzweigung 24 aufweist, von welcher ausgehend ein erster Schalter 26 zwischen der Verzweigung 24 und Masse 14 liegt und ein zweiter Schalter 28 zwischen der Verzweigung 24 und einem Kondensatormodul 30 liegt, welcher eine Vielzahl von einzelnen Kondensatorzellen 32 umfasst, miteinander in Reihe geschaltet sind, so dass der Kondensatormodul 30 mit der Reihe von Kondensatorzellen 32 mit einem ersten Anschluss 34 auf Masse 14 liegt und mit einem zweiten Anschluss 36 mit dem zweiten Schalter 28 verbunden ist.

In dem Kondensatormodul 30 lässt sich somit elektrische Energie aus dem Versorgungsnetz VN abspeichern und dann, wenn im Versorgungsnetz VN ein Energiebedarf vorliegt, wieder in das Versorgungsnetz VN einspeisen.

Die einzelnen Kondensatorzellen 32 sind beispielsweise als elektrochemische Doppelschicht-Kondensatoren aufgebaut, wie sie beispielsweise von der Firma Maxwelle Technologies vertrieben werden.

Das Abspeichern und Einspeisen von Energie erfolgt über eine als Ganzes mit 40 bezeichnete Spannungswandlersteuerung vorgesehen, welche die Schalter 26 und 28 mit einer definierten Zyklusfrequenz abwechselnd und gegebenenfalls mit unterschiedlicher Zeitdauer steuert.

Um die gespeicherte Energie des Kondensatormoduls 30 zu maximieren ist es erforderlich, dass alle Kondensatorzellen $32_1$ bis $32_n$ gleichzeitig ihre Maximal-spannung erreichen.

Ferner ist es erforderlich, dass die Maximalspannung der Kondensatorzellen 32 nicht überschritten wird und keine negative Spannung an den Kondensatorzellen auftritt.

Insbesondere zur Speicherung hoher Energie werden Doppelschicht-Kondensatorzellen verwendet, die allerdings beispielsweise aufgrund von Alterungsprozessen oder anderen Prozessen hinsichtlich ihrer Kapazität variieren, was zur Folge hat, dass in einem erfindungsgemäßen Kondensatormodul 30, bei welchem stets alle Kondensatorzellen 32 mit demselben.Strom geladen oder durch denselben Strom entladen werden, unterschiedliche Spannungen auftreten.

Derartige unterschiedliche Spannungen der Kondensatorzellen 32 führen zu einer Reduktion der maximalen im Kondensatormodul 30 speicherbaren elektrischen Energie.

Aus diesem Grund ist ein erfindungsgemäßes System 50 zum Ausgleich von Ladezuständen der Vielzahl von Kondensatorzellen 32 des Kondensatormoduls 30 vorgesehen.

Dieses System 50 umfasst eine Messeinheit 52, mit einem A/D-Wandler 54. An einem Analogeingang 56 des A/D-Wandlers liegt dabei ein Mittelabgriff 58 eines Spannungsteilers welcher einerseits einen ersten Widerstand 62 aufweist, der zwischen dem Mittelabgriff 58 und dem ersten Anschluss 34 des Kondensatormoduls 30 liegt und eine Vielzahl von zweiten Widerständen $66_1$ bis $66_n$ aufweist, die über Schalter $68_1$ bis $68_n$ eines als Ganzes mit 70 bezeichneten Schalternetzwerks mit Zwischenabgriffen $62_1$ bis $62_n$ verbindbar sind, welche jeweils auf einer dem ersten Anschluss 34 des Kondensatormoduls 30 abgewandten und dem zweiten Anschluss 36 des Kondensatormoduls 30 zugewandten Seite der jeweiligen kondensatorzelle 32 liegen. Die Schalter $68_1$ bis $68_n$ des Schalternetzwerks 70 sind dabei durch einen als Ganzes mit 74 bezeichneten Decoder einzeln ansteuerbar.

Ferner ist jeder der einzelnen Kondensatorzellen $32_1$ bis $32_n$ ein Entladezweig $80_1$ bis $80_n$ zugeordnet, welcher der jeweiligen Kondensatorzelle $32_1$ bis $32_n$ parallel geschaltet ist und einen Entladewiderstand $82_1$ bis $82_n$ umfasst sowie einen in Reihe mit dem Entladewiderstand $82_1$ bis $82_n$ liegenden Schalter $84_1$ bis $84_n$, mit welchem der Entladezweig 80 aktivierbar ist, so dass der jeweilige Kondensator $32_1$ bis $32_n$ über den jeweiligen Entladezweig $80_1$ bis $80_n$ entladbar ist.

Auch die Schalter $84_1$ bis $84_n$ sind über den Decoder 74, und zwar synchron mit den Schaltern $68_1$ bis $68_n$ ansteuerbar.

Mit Hilfe des Decoders 74 besteht nun die Möglichkeit, während eines Messzyklus 90 sukzessive, während einzelner in zeitlichen Abständen aufeinanderfolgender Messphasen 92, getaktet an den einzelnen Zwischenabgriffen $72_1$ bis $72_n$ die Spannungen zwischen den jeweiligen Zwischenabgriff 72 und dem ersten Anschluss 34 des Kondensatormoduls 30 zu messen, wobei die Spannungsmessung durch eine Spannungsmessung seitens des A/D-Wandlers 54 am Mittelabgriff 58 des Spannungsteilers erfolgt, der einerseits gebildet ist durch den ersten Widerstand 62 und andererseits durch den jeweiligen zweiten Widerstand 66, der dem jeweiligen Zwischenabgriff 72 zugeordnet ist.

Wie in Fig. 2 dargestellt, wird dabei beispielsweise bei 16 Kondensatorzellen 32 zunächst die Spannung am Zwischenabgriff $72_1$, dann eine Spannung am Zwischenabgriff $72_5$, dann am Zwischenabgriff $72_9$ und dann am Zwischenabgriff $72_{13}$ gemessen und nachfolgend am Zwischenabgriff $72_2$, am Zwischenabgriff $72_6$, am Zwischenabgriff $72_{10}$ und dann am Zwischenabgriff $72_{14}$ usw., so lange, bis die Spannungen an allen Zwischenabgriffen $72_1$ bis $72_n$ erfasst sind.

Ferner ist der Messeinheit 52 eine Auswerteeinheit 100 zugeordnet, mit welcher die von der Messeinheit 52 ermittelten Spannungen an den einzelnen Kondensatorzellen $32_1$ und $32_n$ ausgewertet werden und gegebenenfalls die Entladezweige $80_1$ und $80_n$ einzeln oder zu mehreren den Kondensatorzellen $32_1$ bis $32_n$ parallel geschaltet werden, um diese zu entladen.

Ein Zusammenwirken der Messeinheit 52 und der Auswerteeinheit 100 ist in Fig. 3 exemplarisch dargestellt.

Zunächst erfolgt durch die Messeinheit 52, wie in Block 102 dargestellt, die Messung der Spannungen an den einzelnen Zwischenabgriffen $72_1$ bis $72_n$, wobei diese, in Fig. 2 dargestellten Spannungen nicht direkt die an den einzelnen Kondensatorzellen $32_1$ bis $32_n$ anliegenden Spannungen $U_c$ liefern, sondern stets die Spannungen all derjenigen Kondensatorzellen 32, die zwischen dem ersten Anschluss 34 und dem jeweiligen Zwischenabgriff 72 liegen, wie in Fig. 2 dargestellt.

Die Messeinheit 52 ist, wie in Block 104 dargestellt, in der Läge, aus diesen Spannungen die einzelnen, an den Kondensatorzellen 32 anliegenden Spannungen $U_c$ zu ermitteln.

Ferner erfolgt dann gemäß Block 104 in der Auswerteeinheit 100 eine Auswertung der einzelnen Spannungen $U_c$. Sind die einzelnen Spannungen $U_c$ - wie im Idealfall vorgesehen - alle gleich groß, so ist keine sogenannte Symmetrierung der Kondensatorzellen $32_1$ bis $32_n$ durch Aktivierung eines oder mehrerer Entladezweige 80 erforderlich, wie sich aus dem Sprung zu Block 106 in Fig. 3 ergibt.

Ist allerdings eine der einzelnen Spannungen $U_c$ einer der Kondensatorzellen 32 größer als die für die jeweiligen einzelnen Kondensatorzellen 32 höchstens zulässige Spannung $U_{ch}$, beispielsweise größer als 2,85 Volt bei einer vorgesehenen Nennspannung von 2,7 Volt, so erfolgt aus Block 104 ein Sprung zu Block 108, gemäß welchem einer Systemsteuerung 110 übermittelt wird, dass ein signifikanter Fehler des Kondensatormoduls 30 vorliegt, worauf die Systemsteuerung 110 die erfindungsgemäße Einrichtung zur Speicherung elektrischer Energie 10 außer Betrieb setzt, beispielsweise durch entsprechende Ansteuerung der Spannungswandlersteuerung 40, welche hierzu durch Öffnen beider Schalter 26, 28 die erfindungsgemäße Einrichtung außer Betrieb setzt.

Ist die Spannung $U_{cx}$ einer einzelnen Kondensatorzelle $32_x$ größer als ein Mittelwert aller Spannungen $U_c$ aller Kondensatorzellen 32, so erfolgt beispielsweise gemäß Block 112 eine Symmetrierung dieser einzelnen Kondensatorzelle $32_x$, und zwar durch Entladen der einzelnen Kondensatorzelle $32_x$ mittels des dieser zugeordneten Entladezweigs $80_x$.

Dies erfolgt durch Ansteuerung des jeweiligen Schalters $84_x$ des jeweiligen Entladezweigs $32_x$, und zwar durch Schließen desselben, so dass die jeweilige Kondensatorzelle $32_x$ entladen wird, und zwar auf eine Spannung $U_c$, welche dem Mittelwert der Spannungen $U_{cx}$ an allen Kondensatorzellen 32 entspricht.

Nach Durchführung der Symmetrierung gemäß Block 112 in Fig. 3 wird gemäß Block 114 noch ein Ladezykluszähler abgefragt, in welchem die vorgesehene Maximalzahl von Ladezyklen für den Kondensatormodul 30 festgelegt ist.

Ist die Zahl der Ladezyklen unterhalb eines Maximalwerts für die Ladezyklen, so ist der jeweilige Messzyklus beendet. Der Messzyklus kann jedoch erneut gestartet werden.

Ist die Zahl der Ladezyklen größer als ein Maximalwert des Ladezykluszählers 114, so erfolgt gemäß Block 116 in Fig. 3 eine Kapazitätsberechnung des Kondensatormoduls 30 unter Berücksichtigung der Kapazitäten aller Kondensatorzellen 32 nach welcher entschieden wird, ob der Systemsteuerung 110 ein Fehler zu melden ist oder ob ein weiterer Messzyklus 90 durchgeführt werden soll.

Ein derartiger Messzyklus 90, gefolgt von einem Symmetrierzyklus 120, ist beispielsweise in Fig. 4 über der Zeitachse dargestellt, wobei sich aus Fig. 4 ergibt, dass der Messzyklus 90 wesentlich kürzer ist als der nachfolgende Symmetrierzyklus 120, was dadurch bedingt ist, dass der Entladewiderstand 82 des jeweiligen Entladezweigs 80 der Kondensatorzellen 32 groß ist, so dass lange Zeiträume für das Entladen der jeweiligen Kondensatorzelle 32 zur Reduktion der Spannung $U_c$ derselben erforderlich sind.

Im Zusammenhang mit der bisherigen Erläuterung der Symmetrierung, das heißt des Entladens der jeweiligen Kondensatorzelle $32_x$, wurde nicht darauf eingegangen, wie stark die jeweilige Kondensatorzelle 32 entladen werden soll.

Eine erste mögliche Lösung sieht vor, dass dann, wenn die Spannung $U_{cx}$ der jeweiligen Kondensatorzelle $32_x$ über der mittleren Spannung $U_{cm}$ der Kordensatorzellen 32 liegt, in erster Näherung zur Symmetrierung das Entladen der jeweiligen Kondensatorzelle 32 auf die Spannung $U_{cm}$ als Sollspannung erfolgen kann, so dass die Spannung der jeweiligen Kondensatorzelle 32 wieder diesem Mittelwert $U_{cm}$ entspricht.

Die Tatsache, dass die jeweilige Kondensatorzelle $32_x$ bei dem vorgegebenen Aufbau des Kondensatormoduls 30 eine höhere Spannung aufweist als die anderen Kondensatorzellen 32 rührt jedoch beispielsweise unter anderem daher, dass sich die Kapazität dieser Kondensatorzelle $32_x$ geändert hat, beispielsweise durch einen Alterungsprozess, und geringer geworden ist. In diesem Fall führt der durch diese Kondensatorzelle $32_x$ fließende Strom, der bei allen Kondensatorzellen 32 gleich groß ist, beim Aufladen dieser Kondensatorzelle $32_x$ zu einer höheren Spannung $U_{cx}$ in derselben als in den anderen Kondensatorzellen 32 des Kondensatormoduls 30.

Wird beim Aufladen des Kondensatormoduls 30 auf die maximale Gesamtspannung $U_{gmax}$, die der Maximalspannung $U_{cmax}$ der Kondensatorzellen 32 multipliziert mit der Zahl derselben entspricht, die Kondensatorzelle $32_x$ mit der gegenüber den anderen Kondensatorzellen 32 höheren Spannung durch den Strom, der durch alle Kondensatorzellen 32 fließt, aufgeladen, so überschreitet die Spannung $U_{cx}$ der Kondensatorzelle $32_x$ diese Spannung $U_{cmax}$ im Zuge des Aufladevorgangs. Dies hat wiederum zur Folge, dass die Aufladung der anderen Kondensatorzellen 32 nicht bis zur maximalen Spannung $U_{cmax}$ und somit bis zur maximalen Speicherkapazität erfolgt.

Aus diesem Grund wird bei einer zweiten Lösung zur präzisen Symmetrierung die Kondensatorzelle $32_x$ auf eine Sollspannung $U_{csx}$ eingestellt, die niedriger ist als die gemessene Spannung $U_{cx}$. Diese Sollspannung wird bei dieser zweiten, präziser arbeitenden Lösung bestimmt durch die Formel

$$U_{csx}\,(t1) = U_{cmax} - \frac{C_g}{C_x}\,(U_{gmax} - U_g(t1))$$

wobei $C_g$ die Gesamtkapazität des Kondensatormoduls 30 und $C_x$ die Kapazität der Kondensatorzelle $32_x$ und $U_g(t1)$ die Gesamtspannung des Kondensatormoduls 30 zum jeweiligen Zeitpunkt ist, zu dem auch die Sollspannung bestimmt wird.

Zur Bestimmung der Kapazitäten wird seitens der Auswerteeinheit 100 aufgrund zweier Messzyklen 90 die Kapazität jeder einzelnen Kondensatorzelle $32_x$ ermittelt.

Aus den Spannungsmessungen lässt sich die für die Ermittlung der Sollspannung $U_{cxs}$ benötigte Kapazitätsrelation $\frac{C_g}{C_x}$ nach folgender Formel ermitteln.

$$\frac{Cg}{Cx} = \frac{Ucx(ta)-Ucx(tb)}{Ug(ta)-Ug(tb)}$$

wobei $t_a$ und $t_b$ zwei unterschiedliche Zeitpunkte sind.

Da sich die Kapazitäten nur sehr langsam ändern kann die Bestimmung der Kapazitätsrelation $\frac{Cg}{Cx}$ in großen Zeitintervallen, beispielsweise von Wochen oder Monaten, erfolgen.

Mit dieser ermittelten Kapazitätsrelation lässt sich für jede der Kondensatorzellen 32 die Sollspannung $U_{cs}$ bestimmen, auf welche jede der Kondensatorzellen 32, beispielsweise die Kondensatorzelle $32_x$ mit durch Alterungsprozesse verringerter Kapazität, entladen werden muss, um beim Aufladen des gesamten Kondensatormoduls 30, im Verlauf von welchem durch alle Kondensatorzellen 32 derselbe Strom fließt, mit allen Kondensatorzellen $32_x$ zum selben Zeitpunkt die Maximalspannung $U_{cmax}$ zu erreichen.

Das heißt, dass im Fall jeder Kondensatorzelle $32_x$, deren Spannung $U_{cx}$ höher ist als die niedrigste Spannungen $U_{cx}$ einer der Kondensatorzellen 32, eine Entladung derselben mittels des jeweiligen Entladezweigs $80_x$ und gesteuert durch eine Entladeeinheit 102 auf die Sollspannung $U_{cs}$, um sicherzustellen, dass beim gemeinsamen Aufladen dieser Kondensatorzellen 32 die Maximalspannung $U_{cmax}$ zum selben Zeitpunkt erreicht wird.

Diese Symmetrierung kann bei dem erfindungsgemäßen System 50 grundsätzlich zu jedem Zeitpunkt durchgeführt werden. Vorzugsweise erfolgt jedoch die Symmetrierung lediglich in einem Spannungsbereich, der zwischen ungefähr einem Viertel der maximalen Gesamtspannung $U_{gmax}$ des Kondensatormoduls 30 und ungefähr der Hälfte der maximalen Gesamtspannung $U_{gmax}$ des Kondensatormoduls 30 liegt.

Durch diese Symmetrierung bei relativ niedrigen Spannungswerten der Gesamtspannung $U_g$ besteht die Möglichkeit, durch wenig Energieverlust bei der einzelnen Kondensatorzelle $32_x$ die Symmetrierung derselben in Relation zu den anderen Kondensatorzellen 32 zu erreichen.

Die Symmetrierung der einzelnen Kondensatorzellen 32 erfolgt jedoch unabhängig von der Überwachung der Spannung $U_c$ der Kondensatorzellen 32 durch die Messeinheit 52, die zur Sicherheit in allen Ladezuständen des Kondensatormoduls 30 erfolgt, wobei beispielsweise eine Wiederholfrequenz der Messzyklen 90 von der Gesamtspannung $U_g$ des Kondensatormoduls 30 abhängig ist.

Beispielsweise liegen zwischen zwei Messzyklen 90 Zeiträume in der Größenordnung von 100 bis 300 Millisekunden bei einer Gesamtspannung $U_g$ bis ungefähr zur Hälfte der maximalen Gesamtspannung $U_{gmax}$, während bei höheren Gesamtspannungen $U_g$ die Zeiträume zwischen zwei Messzyklen 90 verkürzt werden, beispielsweise auf Werte zwischen 40 und 100 Millisekunden, um sicherzustellen, dass keine der Kondensatorzellen 32 über den Maximalwert $U_{cmax}$ für eine der Kondensatorzellen 32 geladen wird.

Da die Alterungsprozesse der Kondensatorzellen 32 in dem Kondensatormodul 30 und auch Prozesse, die zu Beschädigungen der Kondensatorzellen 32 führen können, temperaturabhängig sind, ist zusätzlich zur Messeinheit 52 noch eine Temperaturerfassungseinheit 132 vorgesehen, die über einen A/D-Wandler 134 einen Temperaturfühler 138 abfragt, der die Temperatur in dem Kondensatormodul 30 erfasst. Überschreitet die Temperatur in dem Kondensatormodul 30 eine vorgebbare Maximaltemperatur, so erfolgt über die Systemsteuerung 110 ebenfalls ein Stillsetzen der erfindungsgemäßen Einrichtung zur Speicherung elektrischer Energie, um dem Kondensatormodul 30 die Möglichkeit zu geben, wieder auf eine vorgesehene Temperatur abzukühlen.

Um die Symmetrierung der einzelnen Kondensatorzellen 32 bei stillstehendem Kraftfahrzeug vornehmen zu können, ist die Systemsteuerung 110 mit einer umschaltbaren Spannungsversorgung 140 vorgesehen, die es ermöglicht, das erfindungsgemäße System entweder über die am Versorgungsnetz VN liegende Spannung mit Energie zu versorgen oder über die Spannung des Kondensatormoduls 30. Hierzu steuert die Spannungsversorgung 140 einen Umschalter 142 an, der je nach Zustand die Spannungsversorgung sicherstellt.

Damit besteht die Möglichkeit, auch bei abgeschaltetem Versorgungsnetz VN, das heißt beispielsweise stehendem Kraftfahrzeug das erfindungsgemäße System 50 zu betreiben, da dann die Spannungsversorgung 140 durch die in dem Kondensatormodul 30 vorhandene Energie gespeist wird.

Damit besteht insbesondere die Möglichkeit, die Symmetrierung der einzelnen Kondensatorzellen 32 während der Zeit vorzunehmen, während der keine Energiespeicherung aus einem Versorgungsnetz VN erfolgt und auch das Versorgungsnetz VN abgeschaltet ist, das heißt also während eines Stillstands des Kraftfahrzeugs. Dies hat den Vorteil, dass damit die Entladezweige 80 so dimensioniert sein können, dass durch diese lediglich ein kleiner Strom fließt, so dass für das Entladen der einzelnen Kondensatorzellen 32 und somit das Symmetrieren derselben große Zeiträume zur Verfügung stehen.

**Patentansprüche**

1. System zur Überwachung einer Vielzahl von in einem Kondensatormodul (30) in Reihe geschalteten Kondensatorzellen (32), die als elektrische Energiespeicher in einer Energiespeichereinrichtung (10) eingesetzt sind und in dieser durch einen durch alle Kondensatorzellen (32) fliessenden Aufladestrom aufladbar oder durch einen Entladestrom entladbar sind, wobei das System (50) eine Messeinheit (52) umfasst, mit welcher durch Spannungsmessungen die an den einzelnen Kondensatorzellen (32) anliegenden Spannungen ($U_c$) ermittelbar sind, wobei eine Auswerteeinheit (100) vorgesehen ist, mit welcher eine Sollspannung ($U_{cs}$) für die Kondensatorzellen (32) festlegbar ist, dass das System (50) mindestens einen zu jeder Kondensatorzelle (32) zuschaltbaren Entladezweig (80) aufweist, der durch eine Entladesteuereinheit (102) steuerbar ist, die entsprechend der festgelegten Sollspannung ($U_{cs}$) und der anliegenden Spannung ($U_c$) die jeweilige Kondensatorzelle (32) auf diesen entlädt,
**dadurch gekennzeichnet, dass**
mit der Auswerteeinheit (100) aus der ermittelten Gesamtspannung ($U_g$) des Kondensatormoduls (30) und der bei Aufladung des Kondensatormoduls (30) auf die maximale Gesamtspannung ($U_{gmax}$) vorgesehenen Maximalspannungen ($U_{cmax}$) der Kondensatorzellen (32) die Sollspannung ($U_{csx}$) für die jeweilige Kondensatorzelle ($32_x$) festlegbar ist.

2. System nach Anspruch 1, **dadurch gekennzeichnet, dass** die Auswerteeinheit (100) die Sollspannungen ($U_{csx}$) für die Kondensatorzellen ($32_x$) derart ermittelt, dass beim Aufladen des Kondensatormoduls (30) auf die maximale Gesamtspannung ($U_{gmax}$) alle Kondensatorzellen (32) gleichzeitig die Maximalspannung ($U_{cmax}$) erreichen.

3. System nach einem der voranstehenden Ansprüche, **dadurch gekennzeichnet, dass** die Auswerteeinheit (100) die Kapazität ($C_x$) der einzelnen Kondensatorzellen ($32_x$) berücksichtigt.

4. System nach einem der voranstehenden Ansprüche, **dadurch gekennzeichnet, dass** die Auswerteeinheit (100) eine Kapazitätsrelation ($C_g/C_x$) der Kondensatorzellen ($32_x$) durch eine Messung ermittelt, wobei die Kapazitätsrelation ($C_g/C_x$) das Verhältnis der Gesamtkapazität ($C_g$) des Kondensatormoduls (30) zu der Kapazität ($C_x$) jeder einzelnen Kondensatorzelle (32) ist.

5. System nach Anspruch 4, **dadurch gekennzeichnet, dass** die Auswerteeinheit (100) die Kapazitätsrelation ($C_g/C_x$) durch Messung von Spannungen ($U_g$, $U_c$) der Kondensatorzellen (32) in verschiedenen Ladezuständen bestimmt.

**Claims**

1. System for monitoring a multiplicity of capacitor cells (32) which are connected in series in a capacitor module (30) and are used as electrical energy stores in an energy storage device (10) and are chargeable in said energy storage device by a charge current flowing through all of the capacitor cells (32) or dischargeable by a discharge current, wherein the system (50) comprises a measuring unit (52) by means of which the voltages ($U_c$) present across the individual capacitor cells (32) can be calculated by voltage measurements, wherein an evaluation unit (100) is provided, by means of which a nominal voltage ($U_{cs}$) for the capacitor cells (32) can be set, wherein the system (50) has at least one discharge branch (80) which is connectable to each capacitor cell (32) and is controllable by a discharge control unit (102) which discharges the respective capacitor cell (32) according to the set nominal voltage ($U_{cs}$) and the present voltage ($U_c$) to said voltages,
**characterized in that**
the nominal voltage ($U_{csx}$) for the respective capacitor cell ($32_x$) can be set using the evaluation unit (100) from the calculated total voltage ($U_g$) of the capacitor module (30) and the maximum voltages ($U_{cmax}$) of the capacitor cells (32) which are provided when charging the capacitor module (30) to the maximum total voltage ($U_{gmax}$).

2. System according to Claim 1, **characterized in that** the evaluation unit (100) calculates the nominal voltages ($U_{csx}$) for the capacitor cells ($32_x$) such that, when the capacitor module (30) is charged to the maximum total voltage ($U_{gmax}$), all of the capacitor cells (32) reach the maximum voltage ($U_{cmax}$) simultaneously.

3. System according to either of the preceding claims, **characterized in that** the evaluation unit (100) takes into account the capacitance ($C_x$) of the individual capacitor cells ($32_x$).

4. System according to any of the preceding claims, **characterized in that** the evaluation unit (100) calculates a capacitance relationship ($C_g/C_x$) of the capacitor cells ($32_x$) by a measurement, wherein the capacitance relationship

$(C_g/C_x)$ is the ratio of the total capacitance $(C_g)$ of the capacitor module (30) to the capacitance $(C_x)$ of each individual capacitor cell (32).

5. System according to Claim 4, **characterized in that** the evaluation unit (100) determines the capacitance relationship $(C_g/C_x)$ by measuring voltages $(U_g, U_c)$ of the capacitor cells (32) in different states of charge.

**Revendications**

1. Système de surveillance d'une pluralité de cellules de condensateur (32) branchées en série dans un module de condensateur (30), lesquelles sont utilisées comme accumulateurs d'énergie électrique dans un dispositif d'accumulation d'énergie électrique (10) et peuvent être chargées dans celui-ci par un courant de charge qui circule à travers toutes les cellules de condensateur (32) ou peuvent être déchargées par un courant de décharge, le système (50) comprenant une unité de mesure (52) qui permet, par des mesures de tension, de déterminer les tensions $(U_c)$ présentes aux bornes des cellules de condensateur (32) individuelles, une unité d'interprétation (100) étant prévue, laquelle permet de définir une tension de consigne $(U_{cs})$ pour les cellules de condensateur (32), le système (50) possédant au moins une branche de décharge (80) qui peut être mise en circuit avec chaque cellule de condensateur (32) et qui peut être commandée par une unité de commande de décharge (102) qui décharge la cellule de condensateur (32) correspondante sur celle-ci en fonction de la tension de consigne $(U_{cs})$ définie et de la tension présente $(U_c)$,
**caractérisé en ce que**
l'unité d'interprétation (100) permet, à partir de la tension totale $(U_g)$ déterminée du module de condensateur (30) et des tensions maximales $(U_{cmax})$ des cellules de condensateur (32) prévues lors de la charge du module de condensateur (30) à la tension totale maximale $(U_{gmax})$, de définir la tension de consigne $(U_{csx})$ pour la cellule de condensateur $(32_x)$ correspondante.

2. Système selon la revendication 1, **caractérisé en ce que** l'unité d'interprétation (100) détermine les tensions de consigne $(U_{csx})$ pour les cellules de condensateur $(32_x)$ de telle sorte que lors de la charge du module de condensateur (30) à la tension totale maximale $(U_{gmax})$, toutes les cellules de condensateur (32) atteignent simultanément la tension maximale $(U_{cmax})$.

3. Système selon l'une des revendications précédentes, **caractérisé en ce que** l'unité d'interprétation (100) tient compte de la capacité $(C_x)$ des cellules de condensateur individuelles $(32_x)$.

4. Système selon l'une des revendications précédentes, **caractérisé en ce que** l'unité d'interprétation (100) détermine une relation de capacité $(C_g/C_x)$ des cellules de condensateur $(32_x)$ par une mesure, la relation de capacité $(C_g/C_x)$ étant le rapport entre la capacité totale $(C_g)$ du module de condensateur (30) et la capacité $(C_x)$ de chaque cellule de condensateur (32) individuelle.

5. Système selon la revendication 4, **caractérisé en ce que** l'unité d'interprétation (100) détermine la relation de capacité $(C_g/C_x)$ par mesure des tensions $(U_g, U_c)$ des cellules de condensateur (32) dans différents états de charge.

FIG.1

FIG.2

**FIG.3**

FIG.4

**IN DER BESCHREIBUNG AUFGEFÜHRTE DOKUMENTE**

**In der Beschreibung aufgeführte Patentdokumente**

- US 2003210017 A1